# EUROPÄISCHE PATENTSCHRIFT

(11) **EP 0 993 176 B1**
(45) Veröffentlichungstag und Bekanntmachung des Hinweises auf die Patenterteilung: **13.06.2007**
(21) Anmeldenummer: 99114304.1
(22) Anmeldetag: 21.07.1999
(51) Int. Cl.: H04N 1/32

(54) **Verfahren zum Einbringen und zur Analyse von manipulationssicheren digitalen Fingerabdrücken in elektronischen Dokumenten**
Method to insert and analyse manipulation-secure digital fingerprints in electronic documents
Méthode pour l'insertion et l'analyse d'empreintes digitales résistantes contre des manipulations dans des documents électroniques

(30) Priorität: 09.10.1998 DE 19847942
(43) Veröffentlichungstag der Anmeldung: 12.04.2000
(73) Patentinhaber: Deutsche Telekom AG, 53113 Bonn (DE); Daimler-Benz, InterServices (debis) AG, 14195 Berlin (DE)
(72) Erfinder: Schwenk, Jörg, Dr., 64807 Dieburg (DE); Ueberberg, Johannes, Dr., 53757 St. Augustin (DE)

(56) Entgegenhaltungen:
- US-A- 5 699 427
- DITTMANN J ET AL: "Combining digital watermarks and collusion secure fingerprints for digital images" SECURITY AND WATERMARKING OF MULTIMEDIA CONTENTS, SAN JOSE, CA, USA, 25-27 JAN. 1999, Bd. 3657, Seiten 171-182, XP000961848 Proceedings of the SPIE - The International Society for Optical Engineering, 1999, SPIE-Int. Soc. Opt. Eng, USA ISSN: 0277-786X
- BONEH D ET AL: "COLLUSION-SECURE FINGERPRINTING FOR DIGITAL DATA" ADVANCES IN CRYPTOLOGY - CRYPTO '95. SANTA BARBARA, AUG. 27 - 31, 1995, PROCEEDINGS OF THE ANNUAL INTERNATIONAL CRYPTOLOGY CONFERENCE (CRYPTO), BERLIN, SPRINGER, DE, Bd. CONF. 15, 27. August 1995 (1995-08-27), Seiten 452-465, XP000533644 ISBN: 3-540-60221-6
- BLAKEY G R., MEADOWS C., PURDY G. B.: "Fingerprinting Long Forgiving Messages" ADVANCES IN CRYPTOLOGY - CRYPTO '85 PROCEEDINGS, Seiten 180-189, XP002192967 1986, Berlin, West Germany, Springer-Verlag, West Germany
- WATANABE H ET AL: "A SECURE CODE FOR RECIPIENT WATERMARKING AGAINST CONSPIRACY ATTACKSBY ALL USERS" INFORMATION AND COMMUNICATIONS SECURITY. INTERNATIONAL CONFERENCEICIS. PROCEEDINGS, XX, XX, 11. November 1997 (1997-11-11), Seiten 414-423, XP000953691

## Beschreibung

Die Erfindung bezieht sich auf ein Verfahren der im Oberbegriff des Patentanspruchs 1 näher bezeichneten Art, wie es in DE 19816356.8-31 beschrieben ist.

Durch das schnelle Wachstum des Internets und die dadurch entstandene Möglichkeit, Dokumente digital zu verbreiten, entsteht ein steigender Bedarf zum Schutz vor illegaler Verbreitung von Dokumenten und damit zum Schutz eines Copyrightinhabers vor Raubkopien.

Zu diesem Zweck arbeiten große Firmen, wie IBM, NEC und Microsoft, aber auch kleinere Firmen, wie Digimarc (siehe 20 Funkschau 17/97; S. 21) und Forschungsinstitute, wie die Fraunhofergesellschaft IGD und die GMD Darmstadt daran, sogenannte digitale Wasserzeichen in Dokumente einzubetten. Bei Verfahren auf dieser Grundlage wird eine Information, die den Copyrightinhaber identifiziert, unsichtbar in die zu schützenden Dokumente eingebracht. Die Art des eingebrachten digitalen Wasserzeichens hängt dabei vom jeweiligen Typ des Dokuments ab (z. B. Postscript, JPEG, MPEG-1).

Digitale Wasserzeichen erlauben es dem Copyrightinhaber, sein geistiges Eigentum an einem illegal verteilten Dokument nachzuweisen. Digitale Wasserzeichen erlauben es jedoch nicht, den Verursacher der illegalen Verteilung zu ermitteln und ihm die illegale Verteilung nachzuweisen.

Digitale Fingerabdrücke gehen einen Schritt weiter. Bei Verwendung des Prinzips der Sicherung eines Dokuments über digitale Fingerabdrücke, wird neben dem digitalen Wasserzeichen des Copyrightinhabers gleichzeitig auch der Name des Kunden, der eine elektronische Kopie des Dokuments erwirbt, unsichtbar in das Dokument eingefügt. Verteilt dieser Kunde seine Kopie nun entgegen den Interessen des Copyrightinhabers weiter, so kann dieser anhand seines in allen illegalen Kopie enthaltenen elektronischen Fingerabdrucks eindeutig identifiziert und zur Verantwortung gezogen werden. (Dan Boneh und James Shaw, Collusion-Secure Fingerprinting for Digital Data. Proc. CRYPTO "95" .LNCS 963, Springer-Verlag, Berlin 1995, 452-465.)

Im Buch "Einführung in die endliche Geometrie / von Albrecht Beutelspacher. Bibliographisches Institut Mannheim; 1. Blockpläne. - 1982-, wird die endliche Geometrie als "relativ neues Teilgebiet der Mathematik" definiert und damit eingegrenzt. Endliche geometrische Strukturen sind dadurch gekennzeichnet, dass sie sich ohne Rundungsfehler im Computer darstellen lassen (Endlichkeit), und dass die Schnittmengen zweier Unterstrukturen einer solchen geometrischen Struktur eine bekannte Größe und Form haben. Bei den bekannten Angriffsszenarien auf Fingerprint- Verfahren werden letztendlich immer solche Schnittmengen gebildet. Um die Effekte solcher Angriffe abschätzen zu können, ist es wichtig, die Größe und Struktur dieser Schnittmengen bestimmen zu können.

Das Prinzip der Sicherung von Dokumenten mittels digitaler Fingerabdrücke hat bislang eine gravierende Schwachstelle, die daraus resultiert, daß sich die den einzelnen Kunden zugeordneten Dokumente in ihrem Bitmuster genau an der Stelle unterscheiden, an welcher der individuelle nutzerbezogene Fingerabdruck der unterschiedlichen Kunden angeordnet ist. Gelangt ein Kunde in den Besitz des Dokuments eines zweiten Kunden, oder bildet sich eine Gruppe von Angreifern, so sind diese in der Lage, durch bitweisen Vergleich der beiden Dokumente die Stellen mit den unterschiedlichen digitalen Fingerabdrücken aufzuspüren und sie aus dem Dokument zu beseitigen (löschen). Mit dem Verfahren nach der DE 19816356.8-31 wird, entsprechend Fig. 1, mit Hilfe sich überlappender endlicher geometrischer Strukturen, die Absicht solcher Manipulationen, eine Kopie des Dokuments zu erhalten, aus dem alle nutzerbezogenen Fingerabdrücke entfernt sind, teilweise verhindert, weil eine Schnittmenge S der Fingerabdrücke A, B und C gleich ist, nicht entdeckt wird und für Ermittlungen erhalten bleibt. Solche Ermittlungen sind jedoch bei größeren Gruppen von Angreifern schwierig und können zu mehrdeutigen Ergebnissen führen.

Die Erfindung hat die Aufgabe, diesen Mangel zu beseitigen, mehr Kopien der Dokumente zu ermöglichen, und auch eine größere Gruppe von Angreifern besser erkennen zu können.

Die zur Lösung dieser Aufgabe vorgeschlagenen Verfahrensschritte sind im Kennzeichen des Patentanspruchs 1 aufgeführt.

Im Kennzeichen des Patentanspruchs 2 ist eine vorteilhafte Weiterbildungsmöglichkeit zur noch besseren Ermittlung von Löschungsversuchen beschrieben.

Nachfolgend wird die Erfindung anhand von Ausführungsbeispielen näher beschrieben. In den zugehörigen Zeichnungen zeigen die:

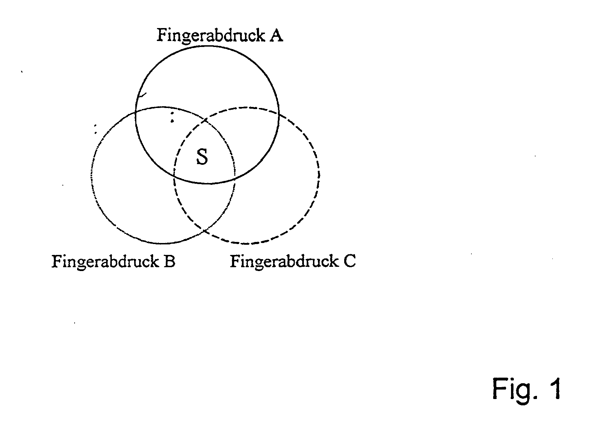

- Fig. 1: die Ermittlung der Schnittmenge S entsprechend dem Hauptpatent,
- Fig. 2: ein System zu Erzeugung digitaler Fingerabdrücke in der projektiven Ebene PG(2,2)und
- Fig. 3: eine anschauliche Darstellung der Erfindung im dreidimensionalen Raum.

Die Erfindung beruht auf der Verwendung von Hyperebenen in endlichen projektiven Räumen PG(d,q). Der Parameter d gibt dabei die maximale Zahl von Angreifern an, die das System verarbeiten kann. Die beiden folgenden Anforderungen werden dabei erfüllt:
1.Jeder Kopie des Dokuments ist genau ein Kunde zugeordnet.
2.Schließen sich k Kunden mit k < d+1 zusammen und entfernen aus einem Dokument alle Fingerabdruck- Teile, die sie durch (bitweisen) Vergleich ermitteln können, so können diese k Kunden aus dem manipulierten Dokument eindeutig identifiziert werden.

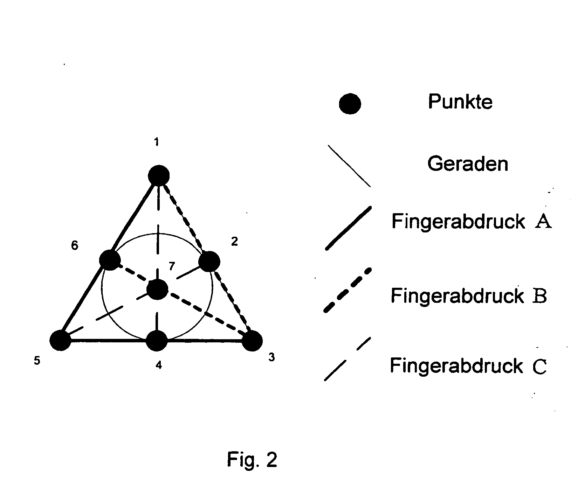

Als Beispiel sei die Erfindung zunächst in der projektiven Ebene PG(2,2) beschrieben. Fig. 2 gibt diese Ebene und die verschiedenen Fingerabdrücke A, B und C wieder.

In Fig. 2 sind alle Punkte und Geraden der projektiven Ebene PG(2,2) eingezeichnet. Jedem Punkt der projektiven Ebene wird mittels einer geheimen Funktion (bzw. Einwegfunktion) eine Stelle im Dokument zugewiesen. Kunde a erhält dann ein Dokument, in dem die Stellen markiert sind (z.B. durch Invertieren der Bits an den betreffenden Stellen), die zum Fingerabdruck A gehören. Für den Kunden, dem der Fingerabdruck A zugeordnet wird, wären dies z.B. die Stellen, die den Punkten 1,3,4,5 und 6 zugeordnet sind.

Vergleichen nun zwei Kunden ihre Fingerabdrücke, so finden sie alle markierten Stellen, bis auf die eine Stelle, die im Schnittpunkt der beiden Fingerabdrücke liegt. Würden z.B. der Kunde mit dem Fingerabdruck A und der Kunde mit dem Fingerabdruck B ihre Fingerabdrücke vergleichen, so könnten sie die Stellen finden, die den Punkten 2, 4, 5 und 7 entsprechen, nicht aber die Stellen 1, 3 und 6.

Eine Identifizierung der Kunden ist aber auch dann noch möglich, wenn sich maximal je zwei Kunden verbünden, denn jede Menge von Schnittpunkten kann nur von genau einem Paar von Kunden übersehen werden. In unserem Beispiel können die Punkte 1,3,6 nur genau von den Kunden a und b übersehen werden; Kunde b und c hätten genau die Punkte 1,2,7 übersehen, usw.

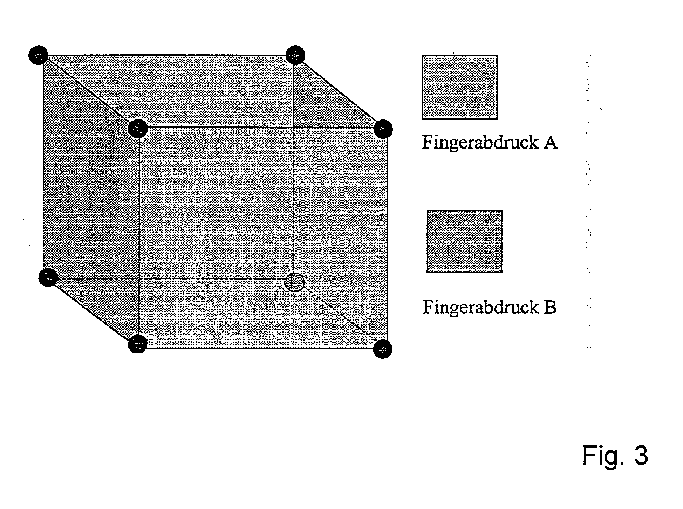

Das oben beschriebene System kann für höhere Dimensionen d und größere Ordnungen q verallgemeinert werden. Im dreidimensionalen Fall liefert ein Würfel (vgl. Fig. 3) ein anschauliches Bild der Situation: Ein Fingerabdruck besteht aus den Punkten, die auf zwei gegenüberliegenden Seiten des Würfels liegen; je zwei Fingerabdrücke schneiden sich genau in vier Geraden, und je drei in genau acht Punkten. Das bedeutet, daß man aus der Schnittmenge von je zwei (bzw. drei) Fingerabdrücken genau auf die beiden (bzw. drei) Kunden Rückschlüsse ziehen kann, die versucht haben, die Fingerabdrücke zu entfernen.

Im allgemeinen Fall basiert die Erfindung auf der Verwendung von Hyperebenen im projektiven Raum PG(d,q). Jedem Kunden werden dabei mindestens zwei Hyperebenen zugewiesen, es können auch mehr sein. Jede Hyperebene darf nur einmal einem Kunden zugewiesen werden. Für diese Zuweisung gibt es verschiedene Varianten:
1. Die beiden Hyperebenen werden zufällig ausgewählt. Bei dieser Variante kann es mit geringer Wahrscheinlichkeit dazu kommen, daß der Kreis der Verdächtigen größer ist als der Kreis der Verräter.
2. Die beiden Hyperebenen sind "parallel", d.h. sie schneiden sich in einer ausgewählten Hyperebene H.

Variante 2 dient dazu, das folgende Problem zu vermeiden: Die Schnittpunkte der Fingerabdrücke A und B werden in einem Dokument entdeckt. Dann ist es auch denkbar, daß diese Schnittpunkte durch Schneiden von Fingerabdruck A und C, oder durch Fingerabdruck B und C erzeugt wurden.

Dieses Problem kann allerdings für große Dimensionen (ab d=3) vernachlässigt werden: Die Schnittmenge von d Fingerabdrücken ist nur mit vernachlässigbar kleiner Wahrscheinlichkeit mehrdeutig, und in diesem seltenen Fall erkennt der Dekodieralgorithmus die Mehrdeutigkeit. Die Gefahr, daß Unschuldige verdächtigt werden, besteht also nicht.

Zur Dekodierung, d.h. zur Rekonstruktion der Hyperebenen aus den gefundenen Schnittpunkten (bzw. Schnitt- geraden, -ebenen, ...) sucht man linear abhängige Mengen. Liegen z.B. in PG(d,q) nur die 2^{d} Schnittpunkte der d Hyperebenen vor, so sucht man Teilmengen von je 2^{d-1} Punkten, die in einer gemeinsamen Hyperebene liegen. Hat man eine solche Hyperebene gefunden, so ist damit auch bereits ein Fingerabdruck identifiziert.

## Patentansprüche

1. Verfahren zum Einbringen manipulationssicherer digitaler Fingerabdrücke und zur Analyse von digitalen Finderabdrücken in elektronischen Dokumenten, bei dem jedem Käufer eine Kopie eines Dokuments zugeordnet wird, in welcher als Markierung ein dem jeweiligen Käufer der Kopie zugeordneter individueller, vom Käufer nicht erkennbarer Fingerabdruck eingebracht ist und bei dem_die Zuweisung der Markierungsstellen des für jede Kopie unterschiedlichen individuellen digitalen Fingerabdrucks unter Zuhilfenahme endlicher geometrischer Strukturen erfolgt, wobei die Kopie jedes Käufers an den Stellen markiert wird, die durch die dem jeweiligen Kunden zugeordnete geometrische Unterstruktur und eine geheime Funktion festgelegt werden, bei dem die so für jeden Käufer als digitaler Fingerabdruck ermittelten Punkte innerhalb der geometrischen Struktur so festgelegt sind, daß sie sich mit den Punkten der Fingerabdrücke anderer Käufer überschneiden, und bei dem anhand eines bitweisen Vergleichs des ursprünglichen Dokuments mit einer Kopie, aus der durch Manipulation von höchstens d Käufern Teile von Fingerabdrücken entfernt wurden, aus den noch vorhandenen Schnittmengen der Fingerabdrücke die an der Manipulation beteiligten Kopien und damit die als Angreifer tätig gewordenen Käufer ermittelt werden können, **dadurch gekennzeichnet, daß**
- jeder Markierungsstelle im Dokument eindeutig ein Punkt des endlichen projektiven Raumes PG mit Dimension d und Ordnung q von Hyperebenen mittels der geheimen Funktion zugeordnet wird,
- jedem Fingerabdruck mindestens zwei Hyperebenen des endlichen projektiven Raumes PG mit Dimension d und Ordnung q zugeordnet werden, von denen jede nur einem Fingerabdruck exklusiv zugeordnet wird, und daß
- zu jedem Fingerabdruck genau die Markierungsstellen markiert werden, die den Punkten der ausgewählten Hyperebenen entsprechen.

2. Verfahren nach Anspruch 1, **dadurch gekennzeichnet, dass**
- aus den im Dokument aufgefundenen markierten Markierungsstellen geometrische Objekte der digitalen Fingerabdrücke rekonstruiert werden,
- durch Analyse der linearen Abhängigkeiten zwischen den digitalen Fingerabdrücken festgestellt wird, in welchen Hyperebenen die Objekte enthalten sind, und
- durch Berechnung dieser Hyperebenen sukzessive die Fingerabdrücke der manipulierenden Kunden bestimmt werden.

## Claims

1. Method for inserting tamperproof digital fingerprints and for analysis of digital fingerprints in electronic documents, wherein a copy of the document is assigned to each buyer, a unique fingerprint that cannot be detected by the buyer being inserted in said copy as a marker, and wherein the assignment of marking locations for the unique digital fingerprint that is different for each copy takes place with the aid of finite geometric structures, the copy of each buyer being marked at the locations defined by the geometric substructure assigned to the respective buyer and by a secret function, wherein the points thus determined as digital fingerprint for each buyer are defined within the geometric structure such that they intersect with the points of the fingerprints of other buyers, and wherein it is possible to determine, on the basis of a bit-by-bit comparison of the original document with a copy from which parts of fingerprints have been removed by manipulation by a maximum of d buyers, from the still remaining intersection sets of the fingerprints, the copies involved in the tampering and hence the buyers who have acted as attackers, **characterized in that**
- each marking location in the document is uniquely assigned, by means of the secret function, a point of the finite projective space PG with dimension d and order q of hyperplanes,
- at least two hyperplanes of the finite projective space PG with dimension d and order q are assigned to each fingerprint, of which hyperplanes each is assigned exclusively to only one fingerprint, and **in that**
- precisely the marking locations corresponding to the points of the selected hyperplanes are marked for each fingerprint.

2. Method according to claim 1, **characterized in that**
- geometric objects of the digital fingerprints can be reconstructed from the marked marking locations found in the document,
- it can be discovered, by analysis of the linear dependencies between the digital fingerprints, which hyperplanes the objects are contained in, and
- the fingerprints of the tampering customers can be determined by successively calculating these hyperplanes.

## Revendications

1. Procédé d'insertion d'empreintes digitales inviolables et d'analyse d'empreintes digitales dans des documents électroniques au cours duquel une copie d'un document est affectée à chaque acheteur dans laquelle est intégrée, comme marquage, une empreinte digitale individuelle affectée à l'acheteur respectif de la copie, non reconnaissable par l'acheteur, et au cours duquel l'affectation des emplacements de marquage de l'empreinte digitale individuelle différente pour chaque copie s'effectue en utilisant des structures géométriques finies, la copie de chaque acheteur étant marquée aux emplacements déterminés par la sous-structure géométrique affectée au client respectif et par une fonction secrète, au cours duquel les points ainsi obtenus comme empreinte digitale pour chaque acheteur sont définis à l'intérieur de la structure géométrique de manière telle qu'ils se recoupent avec les points des empreintes digitales d'autres acheteurs, et au cours duquel il est possible, moyennant une comparaison bit par bit du document d'origine avec une copie de laquelle ont été supprimées par manipulation des parties d'empreintes digitales d'au maximum d acheteurs, de déterminer, à partir des intersections d'ensembles toujours existantes des empreintes digitales, les copies impliquées dans la manipulation et, par conséquent, les acheteurs ayant agi comme agresseurs, **caractérisé en ce que**
- un point de l'espace PG projectif fini de dimension *d* et d'ordre *g* d'hyperplans est affecté à chaque emplacement de marquage dans le document de manière univoque au moyen de la fonction secrète,
- au moins deux hyperplans de l'espace PG projectif fini de dimension *d* et d'ordre *g* sont affectés à chaque empreinte digitale, chacun des hyperplans étant affecté à une empreinte digitale exclusivement, et
- pour chacune des empreintes digitales sont marqués exactement les emplacements de marquage qui correspondent aux points des hyperplans choisis.

2. Procédé selon la revendication 1, **caractérisé en ce que**
- des objets géométriques des empreintes digitales sont reconstruits à partir des emplacements de marquage marqués trouvés dans le document,
- on détermine, par analyse des dépendances linéaires entre les empreintes digitales, les hyperplans dans lesquels sont contenus les objets, et
- on détermine, par calcul de ces hyperplans, successivement les empreintes digitales des clients manipulateurs.
